# EUROPEAN PATENT SPECIFICATION

(11) **EP 3 053 963 B1**
(45) Date of publication and mention of the grant of the patent: **19.09.2018**
(21) Application number: 14888197.2
(22) Date of filing: 17.07.2014
(51) Int. Cl.: C08L 63/00, C08K 5/3437, C08K 5/50

(54) **HALOGEN-FREE RESIN COMPOSITION AND USES THEREOF**
HALOGENFREIE HARZZUSAMMENSETZUNG VERWENDUNG DAVON
COMPOSITION DE RÉSINE EXEMPTE D'HALOGÈNE ET SON UTILISATION

(30) Priority: 02.04.2014 CN 201410131687
(43) Date of publication of application: 10.08.2016
(73) Proprietor: Shengyi Technology Co. Ltd., Dongguan City, Guangdong 523808 (CN)
(72) Inventor: YOU, Jiang, Dongguan Guangdong 523808 (CN); HE, Yueshan, Dongguan Guangdong 523808 (CN)
(74) Representative: Ricker, Mathias
(86) International application number: PCT/CN2014/082419
(87) International publication number: WO 2015/149449

(56) References cited:
- EP-A1- 2 706 091
- WO-A1-2013/056411
- WO-A1-2013/056426
- CN-A- 102 433 001
- CN-A- 102 504 532
- CN-A- 102 838 841
- CN-A- 103 232 705

## Description

### Technical field

The present invention relates to a halogen-free resin composition, and a prepreg and a laminate which are prepared by using the same and have low dielectric constant, low dielectric loss factor, low water absorption, high dimensional stability, high thermal resistance and good flame retardancy, processability and chemical resistance.

### Background art

Traditional laminate used for printed circuit generally utilizes brominated flame retardants to achieve flame retardant, in particular utilizes tetrabromobisphenol-A epoxy resin which has good flame retardancy but can produce hydrogen bromide gas when burning. In addition, in recent years, carcinogen such as dioxins, dibenzofurans and others have been detected in the combustion products of wastes of electrical and electronic equipments containing halogen such as bromine, chlorine and the like, and thus the use of brominated epoxy resin is limited. On July 1, 2006, two environmental protection directives of the European Union "Directive on the waste electrical and electronic equipment" and "Directive on the restriction of the use of certain hazardous substances in electrical and electronic equipment" were officially implemented. The development of halogen-free flame retardant copper-clad laminate has become a hot spot in the related industry field, and each copper-clad laminate manufacturer has launched their own halogen-free flame retardant copper-clad laminate in succession.

With the development of high-speed and multi-function of information processing of electronic products, the frequency applied is increasing. In addition to a higher demand for thermal resistance of laminate materials, there is also a demand that the dielectric constant and the dielectric loss value become lower and lower, and thus reducing Dk/Df has become a hot spot pursued by the practitioners in substrate industry. Traditional FR-4 material mainly utilizes dicyandiamide as a curing agent. This curing agent has reactive tertiary amine and has good processing operability, but since its C-N bond is weak and easy to crack at a high temperature, resulting in a lower thermal decomposition temperature for the cured product, it cannot meet the demand for thermal resistance during the lead-free manufacturing process. In this background, with the wide implementation of the lead-free technology in 2006, phenolic resin began to be used as an epoxy curing agent in the industry. Phenolic resin has benzene ring structure with high density, and thus the thermal resistance of a cured system of phenolic resin and epoxy resin is excellent, but the dielectric property of the cured product has a trend of being worsen.

JP 2002-012650 and JP 2003-082063 disclose synthesizing a series of active ester curing agents containing benzene ring, naphthalene ring or biphenyl structure as curing agents of epoxy resin such as IAAN, IABN, TriABN, TAAN, and the obtained cured products have lower dielectric constant and lower dielectric loss value compared with traditional phenolic products. JP 2003-252958 discloses that a cured product having lower dielectric constant and lower dielectric loss value can be obtained by curing a biphenyl epoxy resin using an active ester, but since the epoxy resin is a difunctional epoxy resin, it has a low crosslinking density with active ester, and thus the cured product has a lower glass transition temperature and a poor thermal resistance. JP 2004-155990 discloses a multifunctional active ester curing agent prepared by reacting aromatic carboxylic acid and aromatic phenol, and a cured product having better dielectric property and higher thermal resistance can be obtained by curing novolac epoxy resin using this active ester curing agent. JJP 2009-040919 discloses a thermosetting resin composition having excellent adhesive force and stable dielectric constant, of which the main components comprise an epoxy resin, an active ester curing agent, a curing accelerator and an organic solvent, and the used amounts of epoxy resin and active ester were studied in this patent. In addition, JP 2009-242559, JP 2009-242560, JP 2010-077344 and JP 2010-077343 disclose respectively that a cured product having low moisture absorption, low dielectric constant and dielectric loss can be obtained by curing alkylated phenol or alkylated naphthol novolac epoxy resin, biphenyl epoxy resin using active ester.

The above existing patents all disclose that using active ester curing agent to cure epoxy resin can reduce the dielectric constant, dielectric loss factor and water absorption of the cured product, but the disadvantages thereof are that it is difficult to further reduce dielectric constant, dielectric loss value and water absorption and improve storage modulus and bending strength under the premise that the adhesion force is not decreased.

### Contents of the invention

In view of the problems existing in the prior arts, the purposes of the present invention are to provide a halogen-free resin composition, and a prepreg and a laminate prepared by using the same. A laminate used for printed circuit prepared by using the resin composition has low dielectric constant, low dielectric loss factor, low water absorption, high dimensional stability, high thermal resistance, high storage modulus, high bending strength, high peel strength and good flame retardancy, processability and chemical resistance.

In order to achieve the above purposes, the present invention employs the following technical solutions:
A halogen-free resin composition comprising the following components based on 100 parts by weight of the total amount of total organic solid matters of (A), (B), (C) and (D):
(A) 10-60 parts by weight of dicyclopentadiene benzoxazine resin;
(B) an epoxy resin;
(C) an active ester curing agent;
(D) a phosphorus-containing flame retardant.

In order to achieve the above purpose, the inventors studied repeatedly and deeply, and found that: the composition obtained by mixing dicyclopentadiene benzoxazine and epoxy resin, active ester curing agent, phosphorus-containing flame retardant and other optional material(s) can achieve the above purpose.

The component (A) of the present invention, i.e. dicyclopentadiene benzoxazine resin, can provide low dielectric constant, low dielectric loss factor, humidity resistance, dimensional stability, thermal resistance, flame retardancy and mechanical property desired by cured resin and a laminate made of the same, and the used amount thereof is suggested to be suitable as 10-60 parts by weight, for example, 13 parts by weight, 16 parts by weight, 19 parts by weight, 22 parts by weight, 25 parts by weight, 28 parts by weight, 31 parts by weight, 34 parts by weight, 37 parts by weight, 40 parts by weight, 43 parts by weight, 46 parts by weight, 49 parts by weight, 52 parts by weight, 55 parts by weight or 58 parts by weight.

Preferably, on the basis of the technical solution provided by the present invention, the content of component (A) dicyclopentadiene benzoxazine resin is 10-30 parts by weight, for example, 12 parts by weight, 14 parts by weight, 16 parts by weight, 18 parts by weight, 20 parts by weight, 22 parts by weight, 24 parts by weight, 26 parts by weight or 28 parts by weight. At this content, the use of component (A) dicyclopentadiene benzoxazine resin as a curing agent for epoxy resin can significantly reduce the dielectric constant, dielectric loss factor of the cured product and make the cured product maintain good toughness.

Preferably, on the basis of the technical solution provided by the present invention, the content of component (A) dicyclopentadiene benzoxazine resin is 30-60 parts by weight, for example, 32 parts by weight, 34 parts by weight, 36 parts by weight, 38 parts by weight, 40 parts by weight, 42 parts by weight, 44 parts by weight, 46 parts by weight, 48 parts by weight, 50 parts by weight, 52 parts by weight, 54 parts by weight, 56 parts by weight or 58 parts by weight. At this content, the use of component (A) dicyclopentadiene benzoxazine resin as main resin can further reduce the dielectric constant, dielectric loss factor and water absorption of the cured product and improve the rigidity and storage modulus of the cured product.

Preferably, on the basis of the technical solution provided by the present invention, the component (A) dicyclopentadiene benzoxazine resin has the following structure:

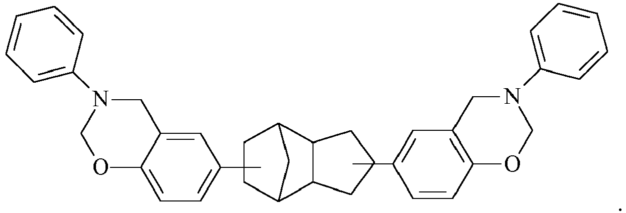

Preferably, on the basis of the technical solution provided by the present invention, the component (B) epoxy resin has an epoxide equivalent of 150-550 g/mol, for example 180g/mol, 210g/mol, 240g/mol, 270g/mol, 300g/mol, 330g/mol, 360g/mol, 390g/mol, 420g/mol, 450g/mol, 480g/mol, 510g/mol or 540g/mol.

Preferably, on the basis of the technical solution provided by the present invention, the component (B) epoxy resin is anyone selected from the group consisting of bisphenol-A epoxy resin, bisphenol-F epoxy resin, phenol novolac epoxy resin, bisphenol-A novolac epoxy resin, o-cresol novolac epoxy resin, dicyclopentadiene epoxy resin, isocyanate epoxy resin, phenol aralkyl self-flame retardant epoxy resin (Xylok epoxy resin) or biphenyl epoxy resin, or a mixture of at least two of them, preferably dicyclopentadiene epoxy resin.

Preferably, the added amount of the component (B) epoxy resin is 10-60 parts by weight, for example 13 parts by weight, 16 parts by weight, 19 parts by weight, 22 parts by weight, 25 parts by weight, 28 parts by weight, 31 parts by weight, 34 parts by weight, 37 parts by weight, 40 parts by weight, 43 parts by weight, 46 parts by weight, 49 parts by weight, 52 parts by weight, 55 parts by weight or 58 parts by weight.

Preferably, on the basis of the technical solution provided by the present invention, the component (C) active ester curing agent comprises an active ester having the following structure: 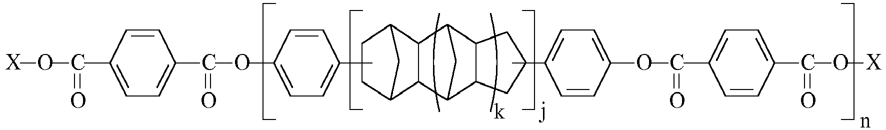 wherein, X is a benzene ring or naphthalene ring, j is 0 or 1, k is 0 or 1, n represents an average number of repeat unit of 0.25-1.25.

Preferably, on the basis of the technical solution provided by the present invention, the added amount of the component (C) active ester curing agent is 5-35 parts by weight, for example 6 parts by weight, 8 parts by weight, 10 parts by weight, 12 parts by weight, 14 parts by weight, 16 parts by weight, 18 parts by weight, 20 parts by weight, 22 parts by weight, 24 parts by weight, 26 parts by weight, 28 parts by weight, 30 parts by weight, 32 parts by weight, 34 parts by weight.

Preferably, on the basis of the technical solution provided by the present invention, the component (D) in the present invention, i.e. phosphorus-containing flame retardant, makes the resin composition have flame retardancy and meet the requirement of UL 94V-0. The added amount of the flame retardant is determined according to the demand of UL 94V-0 level of the flame retardancy of the cured product, without specific limitation. Preferably, the added amount of the phosphorus-containing flame retardant is 5-100 % by weight of the total added amount of component (A), component (B) and component (C), for example 10 % by weight, 15 % by weight, 20 % by weight, 25 % by weight, 30 % by weight, 35 % by weight, 40 % by weight, 45 % by weight, 50 % by weight, 55 % by weight, 60 % by weight, 65 % by weight, 70 % by weight, 75 % by weight, 80 % by weight, 85 % by weight, 90 % by weight or 95 % by weight, preferably 5-50 % by weight.

Preferably, on the basis of the technical solution provided by the present invention, the phosphorus-containing flame retardant is any one selected from the group consisting of tri(2,6-dimethylphenyl)phosphine,
10-(2,5-dihydroxyphenyl)-9,10-dihydro-9-oxa-10-phosphaphenanthrene-10-oxide, 2,6-bis(2,6-dimethylphenyl)phosphinobenzene or
10-phenyl-9,10-dihydro-9-oxa-10-phosphaphenanthrene-10-oxide, phenoxyphosphazene compound, phosphate or polyphosphate, or a mixture of at least two of them.

Preferably, on the basis of the technical solution provided by the present invention, the halogen-free resin composition also comprises (E) a curing accelerator, which can cure the resin and accelerate the curing rate. The curing accelerator is an imidazole curing accelerator or/and a pyridine curing accelerator, further preferably any one selected from the group consisting of 2-methylimidazole, 2-ethyl-4-methylimidazole, 2-phenylimidazole, 2-undecylimidazole, triethylamine, benzyl dimethylamine or dimethylaminopyridine, or a mixture of at least two of them.

The added amount of the curing accelerator is 0.05-1 % by weight of the total added amount of component (A), (B), (C) and (D), for example 0.08 % by weight, 0.1 % by weight, 0.2 % by weight, 0.3 % by weight, 0.4 % by weight, 0.5 % by weight, 0.6 % by weight, 0.7 % by weight, 0.8 % by weight or 0.9 % by weight.

Preferably, on the basis of the technical solution provided by the present invention, the halogen-free resin composition also comprises (F) a filler, which is mainly used to adjust some physical properties of the composition, such as to reduce coefficient of thermal expansion (CTE), water absorption and to improve thermal conductivity, etc.

Preferably, on the basis of the technical solution provided by the present invention, the filler is an organic or inorganic filler.

Preferably, on the basis of the technical solution provided by the present invention, the inorganic filler is anyone selected from the group consisting of silicon dioxide, aluminum hydroxide, alumina, talcum powder, aluminum nitride, boron nitride, silicon carbide, barium sulfate, barium titanate, strontium titanate, calcium carbonate, calcium silicate, mica or glass fiber powder, or a mixture of at least two of them, preferably any one selected from the group consisting of fused silicon dioxide, crystalline silicon dioxide, spherical silicon dioxide, hollow silicon dioxide, aluminum hydroxide, alumina, talcum powder, aluminum nitride, boron nitride, silicon carbide, barium sulfate, barium titanate, strontium titanate, calcium carbonate, calcium silicate, mica or glass fiber powder, or a mixture of at least two of them. Said mixture is, for example, a mixture of crystalline silicon dioxide and amorphous silicon dioxide, a mixture of spherical silicon dioxide and titanium dioxide, a mixture of strontium titanate and barium titanate, a mixture of boron nitride and aluminum nitride, a mixture of silicon carbide and alumina, a mixture of crystalline silicon dioxide, amorphous silicon dioxide and spherical silicon dioxide, a mixture of titanium dioxide, strontium titanate and barium titanate, and a mixture of boron nitride, aluminum nitride, silicon carbide and alumina.

Preferably, on the basis of the technical solution provided by the present invention, the organic filler is anyone selected from the group consisting of polytetrafluoroethylene powder, polyphenylene sulfide or polyethersulfone power, or a mixture of at least two of them.

Preferably, on the basis of the technical solution provided by the present invention, the filler is silicon dioxide.

Preferably, on the basis of the technical solution provided by the present invention, the median of the particle diameter of the filler is 1-15µm, for example, 2µm, 3µm, 4µm, 5µm, 6µm, 7µm, 8µm, 9µm, 10µm, 11µm, 12µm, 13µm or 14µm, preferably 1-10µm. The filler with a particle size falling into this range has a good dispersity.

The added amount of the filler is 0-300 % by weight of the total added amount of component (A), (B), (C) and (D), not including 0, for example 0.08 % by weight, 0.1 % by weight, 0.2 % by weight, 0.3 % by weight, 5 % by weight, 10 % by weight, 15 % by weight, 20 % by weight, 25 % by weight, 30 % by weight, 35 % by weight, 40 % by weight, 45 % by weight, 60 % by weight, 90 % by weight, 120 % by weight, 150 % by weight, 180 % by weight, 210 % by weight, 240 % by weight, 260 % by weight, 270 % by weight, 280 % by weight, 290 % by weight or 295 % by weight, preferably 0-50 % by weight.

The term "comprise(s)/comprising" used in the present invention means that in addition to the components described, other components which give the halogen-free resin composition different characteristics can also be included. In addition, the term "comprise(s)/comprising" used in the present invention may also be replaced by a closed description as "is /being" or "consist(s) of/consisting of'.

For example, the halogen-free resin composition can also comprise a variety of additives, and as specific examples, flame retardant, antioxidant, heat stabilizer, antistatic agent, UV absorber, pigment, colorant, or lubricant and others can be listed. These additives can be used alone, and can also be used in the form of a mixture of two or more of them.

The second purpose of the present invention is to provide a resin varnish which is obtained by dissolving or dispersing the above-mentioned halogen-free resin composition in a solvent.

A conventional method for preparing the resin composition of the present invention is: firstly adding the solid matters, and then adding a liquid solvent, stirring until the solid matters are completely dissolved, then adding a liquid resin and an accelerator, continuing to stir until the mixture is homogeneous, and finally adjusting the solid content of the solution by the solvent to 65-75% to obtain a varnish, i.e. the halogen-free resin composition varnish of the present invention.

As the solvent of the present invention, there is no particular restriction, and as specific examples, the following solvents can be listed: alcohols such as methanol, ethanol, butanol, etc.; ethers such as ethyl cellosolve, butyl cellosolve, ethylene glycol monomethyl ether, carbitol, butyl carbitol, etc.; ketones such as acetone, butanone, methyl ethyl ketone, methyl isobutyl ketone, cyclohexanone, etc.; aromatic hydrocarbons such as toluene, xylene, mesitylene, etc.; esters such as ethoxy ethyl acetate, ethyl acetate, etc.; nitrogen-containing solvents such as N,N-dimethylformamide, N,N-dimethylacetamide, N-methyl-2-pyrrolidone, etc. These solvents can be used alone, and can also be used in the form of a mixture of two or more of them, and preferably are used in the form of a mixture of aromatic hydrocarbons solvents such as toluene, xylene, mesitylene, etc. and ketones solvents such as acetone, butanone, methyl ethyl ketone, methyl isobutyl ketone, cyclohexanone, etc.

The third purpose of the present invention is to provide a prepreg comprising a reinforcing material and the halogen-free resin composition as mentioned above which is attached on the reinforcing material after impregnation and drying. The prepreg has low dielectric constant and low dielectric loss factor, low water absorption, high dimensional stability, high thermal resistance, high storage modulus, high bending strength, high peel strength and good flame retardancy, processability and chemical resistance.

The prepreg of the present invention is prepared by heating and drying the halogen-free resin composition as mentioned above, and the used reinforcing material is nonwoven fabric or other fabric, for example, natural fibers, organic synthetic fibers and inorganic fibers. The abovementioned varnish is used to impregnate the fabrics such as glass cloth and the like or organic fabrics. The impregnated glass cloth is dried in an oven at 155 °C for 5-8 min to obtain a prepreg.

The forth purpose of the present invention is to provide a laminate comprising at least one sheet of the prepreg as mentioned above. The laminate has low dielectric constant and low dielectric loss factor, low water absorption, high dimensional stability, high thermal resistance, high storage modulus, high bending strength, high peel strength and good flame retardancy, processability and chemical resistance.

Compared with the prior art, the present invention has the following beneficial effects:
1. The halogen-free resin composition of the present invention utilizes dicyclopentadiene benzoxazine resin, which has a structure of dicyclopentadiene and has excellent dielectric property in addition to having the advantages of high glass transition temperature (Tg), low water absorption, high dimensional stability, low coefficient of thermal expansion, good thermal resistance and flame retardancy and the like of a conventional benzoxazine resin; adding this benzoxazine resin to epoxy resin can not only reduce the dielectric constant, dielectric loss value, water absorption of the cured product but also enhance the storage modulus, bending strength of the cured product and keep the adhesive force from decreasing; this benzoxazine has a synergistic flame retardant effect with phosphorus-containing flame retardant, and thus can reduce the phosphorus amount desired by the cured product to make the flame retardancy thereof achieve UL 94V-0, and further reduce water absorption;
2. The halogen-free resin composition of the present invention utilizes active ester as a curing agent, playing fully the advantage that the reaction of active ester and epoxy resin does not produce polar groups and thus the dielectric property is excellent and the humidity-heat resistance is good;
3. The prepreg and laminate used for printed circuit boards prepared by using this resin composition have low dielectric constant, low dielectric loss factor, low water absorption, high thermal resistance, high dimensional stability, high peel strength, high storage modulus, high bending strength, and good flame retardancy, processability and chemical resistance.

### Embodiments

Hereinafter, the technical solutions of the present application are further described by the specific embodiments.

The embodiments of the present invention are described in detail as follows, but the present invention is not limited to the ranges of embodiments. In the following, the "parts" means "parts by weight", and the "%" means "% by weight", unless otherwise noted.
(A-1) dicyclopentadiene benzoxazine resin
LZ 8260N70 (trade name, HUNTSMAN)
(A-2) modified PPO
PP-403 (trade name, Jinyi Chemical Industry Co., Ltd., Taiwan,)
(A-3) bisphenol-A benzoxazine
LZ 8290H62 (trade name, HUNTSMAN)
(B) epoxy resin
(B-1) HP-7200H (Dainippon Ink and Chemicals, dicyclopentadiene epoxy resin)
(B-2) NC-3000 (Nippon Kayaku, biphenyl epoxy resin)
(C) curing agent
(C-1) HPC-8000-65T (Dainippon Ink and Chemicals, active ester curing agent)
(C-2) 2812 (MOMENTIVE, Korea, linear phenolic curing agent)
(C-3) DICY (NINGXIADARONG, dicyandiamide curing agent)
(D) flame retardant
(D-1) phosphorus-containing flame retardant
SPB-100 (Otsuka Chemical Co., Ltd., Japan, phenoxyphosphazene compound)
(D-2) nitrogen-containing flame retardant
MCA (Shouguang in Shandong, melamine cyanurate)
(E) 2-phenylimidazole (Shikoku chemicals corporation, Japan)
(F) filler
spherical silica powder (the average particle size is 1-10 µm and the purity is more than 99%)

The method for preparing the resin composition is: firstly adding the solid matters, and then adding a liquid solvent, stirring until the solid matters are completely dissolved, then adding a liquid resin and an accelerator, continuing to stir until being homogeneous, and finally adjusting the solid content of the solution using the solvent to 65-75% to obtain a varnish, i.e. the halogen-free resin composition varnish of the present invention. The varnish is further used to impregnate the fabrics such as glass cloth and the like or organic fabrics. The impregnated glass cloth is heated and dried in an oven at 155 °C for 5-8 min to obtain a prepreg.

Ten sheets of prepregs mentioned above and 2 sheets of metal foils each of which has a thickness of 1 ounce (35 µm thick) are superimposed together, and are laminated through a hot press machine and thus are pressed into a double-sided metal-clad laminate. The lamination should meet the following requirements: 1. the temperature rising rate for the lamination is usually controlled at 1.5-2.5 °C/min when the temperature of the materials is 80-120°C; 2. the pressure conducted for the lamination is a full pressure which is about 350 psi when the temperature of the outer materials is 120-150°C; 3. when curing, the temperature of the materials is controlled at 190°C and the temperature is kept for 90 min; the metal foil is copper foil, nickel foil, aluminum foil and SUS foil, etc., and the material of the metal foil is not limited.

The glass transition temperature, dielectric constant, dielectric loss factor, water absorption, thermal resistance and flame retardancy of the laminate(10 prepregs) used for printed circuit prepared above are measured, as shown in Table 1.

**Table 1. Formulas and physical property data of each Example and Comparative Example 1**

| | Example 1 | Example 2 | Example 3 | Example 4 | Comparative Example 1 | Comparative Example 2 |
|---|---|---|---|---|---|---|
| A-1 | 10 | 30 | 60 | 30 | --- | --- |
| A-2 | --- | --- | --- | --- | --- | 30 |
| A-3 | --- | --- | --- | --- | --- | --- |
| B-1 | 43 | 31 | 14 | --- | 49 | 31 |
| B-2 | --- | --- | --- | 31 | --- | --- |
| C-1 | 32 | 24 | 11 | 24 | 36 | 24 |
| C-2 | --- | --- | --- | --- | --- | --- |
| C-3 | --- | --- | --- | --- | --- | --- |
| D-1 | 15 | 15 | 15 | 15 | 15 | 15 |
| D-2 | --- | --- | --- | --- | --- | --- |
| E | appropriate amount | appropriate amount | appropriate amount | appropriate amount | appropriate amount | appropriate amount |
| F | 40 | 40 | 40 | 40 | 40 | 40 |
| Glass transition temperature (DSC) °C | 153 | 158 | 165 | 172 | 150 | 160 |
| dielectric constant (1GHz) | 3.64 | 3.61 | 3.58 | 3.59 | 3.92 | 3.65 |
| dielectric loss (1GHz) | 0.0078 | 0.0075 | 0.0070 | 0.0072 | 0.0100 | 0.0070 |
| peel strength (N/mm) | 1.47 | 1.45 | 1.41 | 1.43 | 1.43 | 1.12 |
| storage modulus (MPa) | 2068 | 3231 | 4215 | 4585 | 1748 | 1535 |
| bending strength (N/mm²) | 495 | 540 | 592 | 615 | 413 | 387 |
| water absorption (%) | 0.10 | 0.07 | 0.06 | 0.06 | 0.19 | 0.12 |
| dip soldering resistance 288°C, s | >120 | >120 | >120 | >120 | >120 | >120 |
| flame retardancy | V-0 | V-0 | V-0 | V-0 | V-0 | V-0 |

**Table 2. Formulas and physical property data of each example and comparative example 2**

| | Comparative Example 3 | Comparative Example 4 | Comparative Example 5 | Comparative Example 6 | Comparative Example 7 | Comparative Example 8 | Comparative Example 9 |
|---|---|---|---|---|---|---|---|
| A-1 | --- | --- | 30 | 30 | 30 | 30 | 30 |
| A-2 | --- | --- | --- | --- | --- | --- | --- |
| A-3 | 60 | 10 | --- | --- | --- | --- | --- |
| B-1 | 14 | 43 | 37 | 51 | 31 | 42 | 31 |
| B-2 | --- | --- | --- | --- | --- | --- | --- |
| C-1 | 11 | 32 | --- | --- | 24 | 28 | 24 |
| C-2 | --- | --- | 18 | --- | --- | --- | --- |
| C-3 | --- | --- | --- | 4 | --- | --- | --- |
| D-1 | 15 | 15 | 15 | 15 | --- | --- | 15 |
| D-2 | --- | --- | --- | --- | 15 | --- | --- |
| E | appropriate amount | appropriate amount | appropriate amount | appropriate amount | appropriate amount | appropriate amount | appropriate amount |
| F | 40 | 40 | 40 | 40 | 40 | 40 | --- |
| Glass transition temperature (DSC) °C | 167 | 151 | 161 | 152 | 155 | 167 | 158 |
| dielectric constant (1GHz) | 3.80 | 3.79 | 3.87 | 3.81 | 3.67 | 3.65 | 3.70 |
| dielectric loss (1GHz) | 0.0110 | 0.0098 | 0.0135 | 0.0103 | 0.0095 | 0.0079 | 0.0082 |
| peel strength (N/mm) | 1.39 | 1.44 | 1.48 | 1.41 | 1.45 | 1.46 | 1.58 |
| storage modulus (MPa) | 4420 | 2120 | 3563 | 2612 | 3380 | 3080 | 2651 |
| bending strength (N/mm²) | 585 | 480 | 560 | 425 | 521 | 475 | 461 |
| water absorption (%) | 0.06 | 0.10 | 0.08 | 0.15 | 0.09 | 0.08 | 0.09 |
| dip soldering resistance 288°C, s | >120 | >120 | >120 | 85 | >120 | >120 | >120 |
| flame retardancy | V-0 | V-0 | V-0 | V-0 | V-1 | V-1 | V-1 |

Test methods for the above characteristics are as follows:

### (a) Glass transition temperature (Tg)

Glass transition temperature is tested according to differential scanning calorimetry (DSC) as described by IPC-TM-650 2.4.25.

### (b) Dielectric constant and dielectric loss factor

Dielectric constant and dielectric loss factor are tested at 1 GHz according to the resonance method using a strip line, in accordance with IPC-TM-650 2.5.5.5.

### (c) Peel strength

Peel strength of the metal cover layer is tested in accordance with the experimental conditions "after thermal stress" in the IPC-TM-650 2.4.8 method.

### (d) Storage modulus

Storage modulus is tested according to IPC-TM-650 2.4.24.4 method.

### (e) Bending strength

Bending strength is tested according to IPC-TM-650 2.4.4 method, by applying the load on a sample having specified size and shape at room temperature.

### (f) Water absorption

Water absorption is tested according to IPC-TM-650 2.6.2.1 method.

### (g) Dip soldering resistance

Dip soldering resistance is tested according to IPC-TM-650 2.4.13.1 by observing the time of delamination and blister.

### (h) Flame retardancy

Flame retardancy is tested according to UL 94 vertical combustion method.

From the physical data in table 1, it can be seen that the obtained laminates after co-curing dicyclopentadiene benzoxazine resin, epoxy resin and active ester curing agent in Examples 1-4 have significant improvements in dielectric property, water absorption, storage modulus and bending strength, without reducing peel strength. Comparative Example 1 uses dicyclopentadiene epoxy resin and active ester curing agent, and the obtained laminate after curing has high peel strength, common dielectric property and high water absorption while the storage modulus and bending strength are lower. In Comparative Example 2, after adding modified PPO, the dielectric property and water absorption have a significant improvement, but the peel strength, storage modulus and bending strength tend to worsen. Comparative Example 3 uses bisphenol-A oxazine as the main resin; Comparative Example 4 uses bisphenol-A oxazine and active ester to co-cure epoxy resin; Comparative Example 5 uses linear phenolic resin instead of active ester to cure dicyclopentadiene benzoxazine and epoxy resin; Comparative Example 6 uses dicyandiamide instead of active ester to cure dicyclopentadiene benzoxazine and epoxy resin, the dielectric properties of the laminates in these Comparative Examples are all significantly deteriorated, wherein in Comparative Example 6 the water absorption, storage modulus and thermal resistance are also deteriorated. Comparative Examples 7 uses nitrogen-containing flame retardant and Comparative Examples 8 does not use flame retardant, and the obtained laminates have poor flame retardancy which can only achieve V-1 level. Comparative Examples 9 uses dicyclopentadiene benzoxazine and active ester to co-cure epoxy resin without adding a filler, and the obtained laminate has an improved peel strength, but poor storage modulus and flame retardancy.

As mentioned above, compared to conventional halogen-free laminates, the laminate used for printed circuit of the present invention has more excellent dielectric property, humidity resistance, dimensional stability and peel strength, and thus is suitable for high density interconnector field. In addition, the present invention makes full use of the synergistic characteristic of benzoxazine resin and phosphorus-containing flame retardant, and the halogen content is in the range of JPCA halogen-free standard and can achieve V-0 standard in flame retardancy experiment UL94, and thus the laminate of the present invention has environmental protection effect.

The applicant states that: the present application illustrates the detailed methods of the present invention by the above examples.

## Claims

1. A halogen-free resin composition, **characterized in that** it comprises the following components based on 100 parts by weight of the total amount of total organic solid matters of (A), (B), (C) and (D):
(A) 10-60 parts by weight of dicyclopentadiene benzoxazine resin;
(B) an epoxy resin;
(C) an active ester curing agent;
(D) a phosphorus-containing flame retardant.

2. The halogen-free resin composition according to claim 1, **characterized in that** the content of the dicyclopentadiene benzoxazine resin is 10-30 parts by weight.

3. The halogen-free resin composition according to claim 1, **characterized in that** the content of the dicyclopentadiene benzoxazine resin is 30-60 parts by weight.

4. The halogen-free resin composition according to claim 1 or 2, **characterized in that** the dicyclopentadiene benzoxazine resin has the following structure:

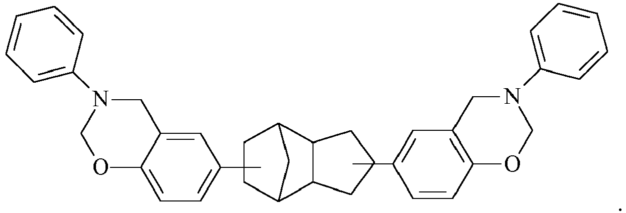

5. The halogen-free resin composition according to claim 1 or 2, **characterized in that** the component (B) epoxy resin has an epoxide equivalent of 150-550 g/mol, or the added amount of the component (B) epoxy resin is 10-60 parts by weight.

6. The halogen-free resin composition according to claim 1 or 2, **characterized in that** the component (B) epoxy resin is anyone selected from the group consisting of bisphenol-A epoxy resin, bisphenol-F epoxy resin, phenol novolac epoxy resin, bisphenol-A novolac epoxy resin, o-cresol novolac epoxy resin, dicyclopentadiene epoxy resin, isocyanate epoxy resin, phenol aralkyl self-flame retardant epoxy resin or biphenyl epoxy resin, or a mixture of at least two of them, preferably dicyclopentadiene epoxy resin.

7. The halogen-free resin composition according to claim 1 or 2, **characterized in that** the active ester curing agent comprises an active ester having the following structure: 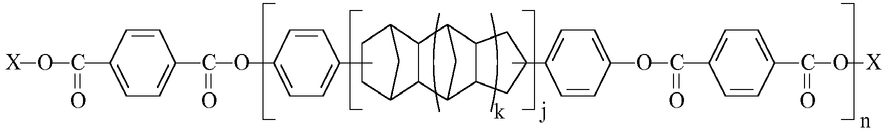 wherein X is a benzene ring or naphthalene ring, j is 0 or 1, k is 0 or 1, n represents an average number of repeat unit of 0.25-1.25, or the added amount of the component (C) active ester curing agent is 5-35 parts by weight.

8. The halogen-free resin composition according to claim 1 or 2, **characterized in that** the added amount of the phosphorus-containing flame retardant is 5-100 % by weight of the total added amount of component (A), component (B) and component (C), preferably 5-50 % by weight, or the phosphorus-containing flame retardant is any one selected from the group consisting of tri(2,6-dimethylphenyl)phosphine, 10-(2,5-dihydroxyphenyl)-9,10-dihydro-9-oxa-10-phosphaphenanthrene-10-oxide, 2,6-bis(2,6-dimethylphenyl)phosphinobenzene or 10-phenyl-9,10-dihydro-9-oxa-10-phosphaphenanthrene-10-oxide, phenoxyphosphazene compound, phosphate or polyphosphate, or a mixture of at least two of them.

9. The halogen-free resin composition according to claim 1 or 2, **characterized in that** the halogen-free resin composition also comprises (E) a curing accelerator, wherein the curing accelerator is preferably an imidazole curing accelerator and/or a pyridine curing accelerator, further preferably any one selected from the group consisting of 2-methylimidazole, 2-ethyl-4-methylimidazole, 2-phenylimidazole, 2-undecylimidazole, triethylamine, benzyl dimethylamine or dimethylaminopyridine, or a mixture of at least two of them, or wherein the added amount of the curing accelerator is preferably 0.05-1 % by weight of the total added amount of component (A), (B), (C) and (D).

10. The halogen-free resin composition according to claim 1 or 2, **characterized in that** the halogen-free resin composition further comprises (F) a filler,
wherein the filler is preferably an organic or inorganic filler, and, preferably, the inorganic filler is anyone selected from the group consisting of silicon dioxide, aluminum hydroxide, alumina, talcum powder, aluminum nitride, boron nitride, silicon carbide, barium sulfate, barium titanate, strontium titanate, calcium carbonate, calcium silicate, mica or glass fiber powder, or a mixture of at least two of them, preferably anyone selected from the group consisting of fused silicon dioxide, crystalline silicon dioxide, spherical silicon dioxide, hollow silicon dioxide, aluminum hydroxide, alumina, talcum powder, aluminum nitride, boron nitride, silicon carbide, barium sulfate, barium titanate, strontium titanate, calcium carbonate, calcium silicate, mica or glass fiber powder, or a mixture of at least two of them, and, preferably, the organic filler is anyone selected from the group consisting of polytetrafluoroethylene powder, polyphenylene sulfide or polyethersulfone power, or a mixture of at least two of them, and, preferably, the filler is silicon dioxide.

11. The halogen-free resin composition according to claim 10, **characterized in that** the median of the particle diameter of the filler is 1-15 µm, preferably 1-10 µm.

12. The halogen-free resin composition according to claim 10, **characterized in that** the added amount of the filler is 0-300 % by weight of the total added amount of component (A), (B), (C) and (D), not including 0, preferably 0-50 % by weight.

13. A resin varnish, **characterized in that** the resin varnish is obtained by dissolving or dispersing the halogen-free resin composition according to any one of claims 1-12 in a solvent.

14. A prepreg, **characterized in that** the prepreg comprises a reinforcing material and the halogen-free resin composition according to any one of claims 1-12 which is attached on the reinforcing material after impregnation and drying.

15. A laminate, **characterized in that** the laminate comprises at least one sheet of the prepreg according to claim 14.

## Patentansprüche

1. Halogenfreie Harzzusammensetzung, **dadurch gekennzeichnet, dass** sie die folgenden Komponenten umfasst, bezogen auf 100 Gewichtsteile der Gesamtmenge der gesamten organischen Feststoffe (A), (B), (C) und (D):
(A) 10-60 Gewichtsteile Dicyclopentadienbenzoxazinharz;
(B) ein Epoxidharz;
(C) ein Aktivester-Härtungsmittel
(D) ein phosphorhaltiges Flammschutzmittel.

2. Halogenfreie Harzzusammensetzung nach Anspruch 1, **dadurch gekennzeichnet, dass** der Gehalt an Dicyclopentadienbenzoxazinharz 10-30 Gewichtsteile beträgt.

3. Halogenfreie Harzzusammensetzung nach Anspruch 1, **dadurch gekennzeichnet, dass** der Gehalt an Dicyclopentadienbenzoxazinharz 30-60 Gewichtsteile beträgt.

4. Halogenfreie Harzzusammensetzung nach Anspruch 1 oder 2, **dadurch gekennzeichnet, dass** das Dicyclopentadienbenzoxazinharz die folgende Struktur aufweist:

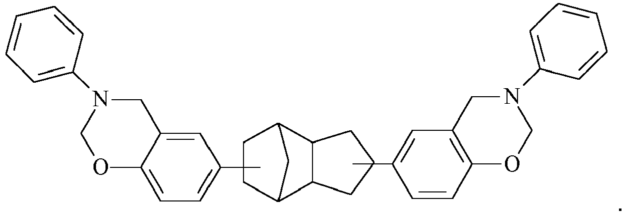

5. Halogenfreie Harzzusammensetzung nach Anspruch 1 oder 2, **dadurch gekennzeichnet, dass** das Epoxidharz der Komponente (B) ein Epoxidäquivalent von 150-550 g/mol aufweist oder die hinzugegebene Menge des Epoxidharzes der Komponente (B) 10-60 Gewichtsteile beträgt.

6. Halogenfreie Harzzusammensetzung nach Anspruch 1 oder 2, **dadurch gekennzeichnet, dass** das Epoxidharz der Komponente (B) ausgewählt ist aus der Gruppe bestehend aus Bisphenol-A-Epoxidharz, Bisphenol-F-Epoxidharz, Phenolnovolak-Epoxidharz, Bisphenol-A-Novolak-Epoxidharz, o-Cresol-Novolak-Epoxidharz, Dicyclopentadien-Epoxidharz, Isocyanat-Epoxidharz, selbstflammhemmendes Phenol-Aralkyl-Epoxidharz oder Biphenyl-Epoxidharz oder einer Mischung aus mindestens zweien davon, bevorzugt Dicyclopentadien-Epoxidharz.

7. Halogenfreie Harzzusammensetzung nach Anspruch 1 oder 2, **dadurch gekennzeichnet, dass** das Aktivester-Härtungsmittel einen Aktivester mit der folgenden Struktur umfasst: 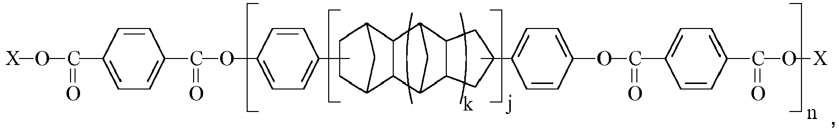 worin X ein Benzolring oder ein Naphthalinring ist, j 0 oder 1 ist, k 0 oder 1 ist, n eine durchschnittliche Anzahl an Wiederholungseinheiten von 0,25-1,25 darstellt, oder wobei die hinzugegebene Menge des Aktivester-Härtungsmittels der Komponente (C) 5-35 Gewichtsteile beträgt.

8. Halogenfreie Harzzusammensetzung nach Anspruch 1 oder 2, **dadurch gekennzeichnet, dass** die hinzugegebene Menge des phosphorhaltigen Flammschutzmittels 5-100 Gew.-% der hinzugegebenen Gesamtmenge der Komponente (A), Komponente (B) und Komponente (C), bevorzugt 5-50 Gew.-%, beträgt oder das phosphorhaltige Flammschutzmittel ausgewählt ist aus der Gruppe bestehend aus Tri(2,6-dimethylphenyl)phosphin, 10-(2,5-Dihydroxyphenyl)-9,10-dihydro-9-oxa-10-phosphaphenanthren-10-oxid), 2,6-Bis(2,6-dimethylphenyl)phosphinobenzol oder 10-Phenyl-9,10-dihydro-9-oxa-10-phosphaphenanthren-10-oxid, einer Phenoxyphosphazenverbindung, Phosphat oder Polyphosphat oder einer Mischung aus wenigstens zweien davon.

9. Halogenfreie Harzzusammensetzung nach Anspruch 1 oder 2, **dadurch gekennzeichnet, dass** die halogenfreie Harzzusammensetzung ferner (E) einen Härtungsbeschleuniger umfasst, wobei der Härtungsbeschleuniger bevorzugt ein Imidazol-Härtungsbeschleuniger und/oder ein Pyridin-Härtungsbeschleuniger ist, weiter bevorzugt ausgewählt ist aus der Gruppe bestehend aus 2-Methylimidazol, 2-Ethyl-4-methylimidazol, 2-Phenylimidazol, 2-Undecylimidazol, Triethylamin, Benzyldimethylamin oder Dimethylaminopyridin oder einer Mischung aus wenigstens zweien davon, oder wobei die hinzugegebene Menge des Härtungsbeschleunigers bevorzugt 0,05-1 Gew.-% der hinzugegebenen Gesamtenge der Komponenten (A), (B), (C) und (D) beträgt.

10. Halogenfreie Harzzusammensetzung nach Anspruch 1 oder 2, **dadurch gekennzeichnet, dass** die halogenfreie Harzzusammensetzung ferner (F) einen Füllstoff umfasst,
wobei der Füllstoff bevorzugt ein organischer oder anorganischer Füllstoff ist und der anorganische Füllstoff bevorzugt ausgewählt ist aus der Gruppe bestehend aus Siliziumdioxid, Aluminiumhydroxid, Aluminiumdioxid, Talkumpuder, Aluminiumnitrid, Bornitrid, Siliziumcarbid, Bariumsulfat, Bariumtitanat, Strontiumtitanat, Calciumcarbonat, Calciumsilikat, Glimmer oder Glasfaserpulver oder einer Mischung aus mindestens zweien davon, vorzugsweise ausgewählt ist aus der Gruppe bestehend aus Quarzglas (fused silicon dioxide), kristallinem Siliziumdioxid, sphärischem Siliziumdioxid, hohlem Siliziumdioxid, Aluminiumhydroxid, Aluminiumdioxid, Talkumpuder, Aluminiumnitrid, Bornitrid, Siliziumcarbid, Bariumsulfat, Bariumtitanat, Strontiumtitanat, Calciumcarbonat, Calciumsilikat, Glimmer oder Glasfaserpulver oder einer Mischung aus mindestens zweien davon, und der organische Füllstoff vorzugsweise ausgewählt ist aus der Gruppe bestehend aus Polytetrafluorethylenpulver, Polyphenylensulfid- oder Polyethersulfonpulver oder einer Mischung aus mindestens zweien davon ist, und der Füllstoff vorzugsweise Siliziumdioxid ist.

11. Halogenfreie Harzzusammensetzung nach Anspruch 10, **dadurch gekennzeichnet, dass** der mittlere Teilchendurchmesser des Füllstoffs 1-15 µm, bevorzugt 1-10 µm, beträgt.

12. Halogenfreie Harzzusammensetzung nach Anspruch 10, **dadurch gekennzeichnet, dass** die hinzugegebene Menge des Füllstoffs 0-300 Gew.-% der hinzugegebenen Gesamtmenge der Komponenten (A), (B), (C) und (D), ausgenommen 0, bevorzugt 0-50 Gew.-%, beträgt.

13. Harzlack, **dadurch gekennzeichnet, dass** der Harzlack erhalten wird, indem die halogenfreie Harzzusammensetzung nach einem der Ansprüche 1-12 in einem Lösungsmittel gelöst oder dispergiert wird.

14. Prepreg, **dadurch gekennzeichnet, dass** das Prepreg ein Verstärkungsmaterial und die halogenfreie Harzzusammensetzung nach einem der Ansprüche 1-12, die nach Imprägnieren und Trocknen an das Verstärkungsmaterial anhaftet, umfasst.

15. Laminat, **dadurch gekennzeichnet, dass** das Laminat mindestens eine Schicht aus dem Prepreg nach Anspruch 14 umfasst.

## Revendications

1. Composition de résine sans halogène, **caractérisée en ce qu'**elle comprend les composants suivants pour 100 parties en poids de la quantité totale de matières sèches organiques totales de (A), (B), (C) et (D) :
(A) 10 à 60 parties en poids de résine de dicyclopentadiène benzoxazine ;
(B) une résine époxy ;
(C) un agent de durcissement ester actif ;
(D) un retardateur de flamme contenant du phosphore.

2. Composition de résine sans halogène selon la revendication 1, **caractérisée en ce que** la teneur de la résine de dicyclopentadiène benzoxazine est de 10 à 30 parties en poids.

3. Composition de résine sans halogène selon la revendication 1, **caractérisée en ce que** la teneur de la résine de dicyclopentadiène benzoxazine est de 30 à 60 parties en poids.

4. Composition de résine sans halogène selon la revendication 1 ou 2, **caractérisée en ce que** la résine de dicyclopentadiène benzoxazine répond à la structure suivante :

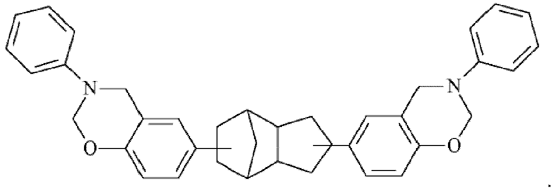

5. Composition de résine sans halogène selon la revendication 1 ou 2, **caractérisée en ce que** le composant (B) résine époxy a un équivalent époxyde de 150 à 550 g/mole, ou la quantité ajoutée du composant (B) résine époxy est de 10 à 60 parties en poids.

6. Composition de résine sans halogène selon la revendication 1 ou 2, **caractérisée en ce que** le composant (B) résine époxy est l'un quelconque choisi dans le groupe consistant en la résine époxy bisphénol A, la résine époxy bisphénol F, la résine époxy phénol novolaque, la résine époxy bisphénol A novolaque, la résine époxy au crésol novolaque, la résine époxy dicyclopentadiène, la résine époxy isocyanate, la résine époxy auto-retardatrice de flamme phénol aralkyle ou la résine époxy biphényle, ou un mélange d'au moins deux d'entre elles, de préférence la résine époxy dicyclopentadiène.

7. Composition de résine sans halogène selon la revendication 1 ou 2, **caractérisée en ce que** l'agent de durcissement ester actif comprend un ester actif répondant à la structure suivante : 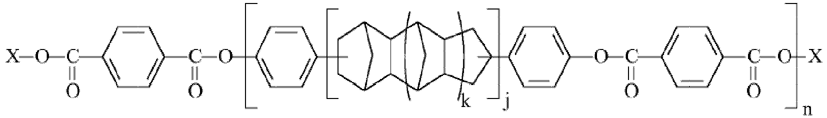 dans laquelle X est un cycle benzène ou un cycle naphtalène, j vaut 0 ou 1, k vaut 0 ou 1, n représente un nombre moyen de motif répété de 0,25 à 1,25, ou la quantité ajoutée du composant (C) agent de durcissement ester actif est de 5 à 35 parties en poids.

8. Composition de résine sans halogène selon la revendication 1 ou 2, **caractérisée en ce que** la quantité ajoutée du retardateur de flamme contenant du phosphore est de 5 à 100 % en poids de la quantité ajoutée totale de composant (A), de composant (B) et de composant (C), de préférence de 5 à 50 % en poids, ou le retardateur de flamme contenant du phosphore est l'un quelconque choisi dans le groupe consistant en la tri(2,6-diméthylphényl)phosphine, le 10-(2,5-dihydroxyphényl)-9,10-dihydro-9-oxa-10-phosphaphénanthrène-10-oxyde, le 2,6-bis(2,6-diméthylphényl)phosphinobenzène ou le 10-phényl-9,10-dihydro-9-oxa-10-phosphaphénanthrène-10-oxyde, un composé phénoxyphosphazène, un phosphate ou un polyphosphate, ou un mélange d'au moins deux d'entre eux.

9. Composition de résine sans halogène selon la revendication 1 ou 2, **caractérisée en ce que** la composition de résine sans halogène comprend également (E) un accélérateur de durcissement, dans lequel l'accélérateur de durcissement est de préférence un accélérateur de durcissement imidazole et/ou un accélérateur de durcissement pyridine, en outre de préférence l'un quelconque choisi dans le groupe consistant en le 2-méthylimidazole, le 2-éthyl-4-méthylimidazole, le 2-phénylimidazole, le 2-undécylimidazole, la triéthylamine, la benzyl diméthylamine ou la diméthylaminopyridine, ou un mélange d'au moins deux d'entre eux, ou dans lequel la quantité ajoutée de l'accélérateur de durcissement est de préférence de 0,05 à 1 % en poids de la quantité ajoutée totale de composant (A), (B), (C) et (D).

10. Composition de résine sans halogène selon la revendication 1 ou 2, **caractérisée en ce que** la composition de résine sans halogène comprend en outre (F) une charge,
dans laquelle la charge est de préférence une charge organique ou inorganique, et, de préférence, la charge inorganique est l'une quelconque choisie dans le groupe consistant en le dioxyde de silicium, l'hydroxyde d'aluminium, l'alumine, la poudre de talc, le nitrure d'aluminium, le nitrure de bore, le carbure de silicium, le sulfate de baryum, le titanate de baryum, le titanate de strontium, le carbonate de calcium, le silicate de calcium, le mica ou la poudre de fibre de verre, ou un mélange d'au moins deux d'entre eux, de préférence l'un quelconque choisi dans le groupe consistant en le dioxyde de silicium fondu, le dioxyde de silicium cristallin, le dioxyde de silicium sphérique, le dioxyde de silicium creux, l'hydroxyde d'aluminium, l'alumine, la poudre de talc, le nitrure d'aluminium, le nitrure de bore, le carbure de silicium, le sulfate de baryum, le titanate de baryum, le titanate de strontium, le carbonate de calcium, le silicate de calcium, le mica ou la poudre de fibre de verre, ou un mélange d'au moins deux d'entre eux, et, de préférence, la charge organique est l'une quelconque choisie dans le groupe consistant en la poudre de polytétrafluoroéthylène, la poudre de poly(sulfure de phénylène) ou de polyéthersulfone, ou un mélange d'au moins deux d'entre eux, et, de préférence, la charge est du dioxyde de silicium.

11. Composition de résine sans halogène selon la revendication 10, **caractérisée en ce que** la médiane du diamètre de particule de la charge est de 1 à 15 µm, de préférence de 1 à 10 µm.

12. Composition de résine sans halogène selon la revendication 10, **caractérisée en ce que** la quantité ajoutée de la charge est de 0 à 300 % en poids de la quantité ajoutée totale de composant (A), (B), (C) et (D), n'incluant pas 0, de préférence de 0 à 50 % en poids.

13. Vernis de résine, **caractérisé en ce que** le vernis de résine est obtenu par dissolution ou dispersion de la composition de résine sans halogène selon l'une quelconque des revendications 1 à 12 dans un solvant.

14. Pré-imprégné, **caractérisé en ce que** le pré-imprégné comprend un matériau de renfort et la composition de résine sans halogène selon l'une quelconque des revendications 1 à 12 qui est fixée sur le matériau de renfort après imprégnation et séchage.

15. Stratifié, **caractérisé en ce que** le stratifié comprend au moins une feuille du pré-imprégné selon la revendication 14.
